# EUROPEAN PATENT APPLICATION

(11) **EP 4 502 800 A1**
(43) Date of publication of application: **05.02.2025**
(21) Application number: 24177223.5
(22) Date of filing: 22.05.2024
(51) Int. Cl.: G06F 9/50

(54) **INTERFACE TO OFFLOAD AI/ML OPERATIONS ACROSS ENTITIES**

(30) Priority: 04.08.2023 FI 20235867
(71) Applicant: Nokia Technologies Oy, 02610 Espoo (FI)
(72) Inventor: KASHYAP, Bharath Ramesh, Bangalore (IN); ALIZADEH ASHRAFI, Mahmood Reza, Espoo (FI); KIM, Jee Hyun, Unterhaching (DE); NASSAR, Mohamed Amin, Munich (DE)
(74) Representative: Bryers Intellectual Property Ltd

(57) **Abstract**

Method comprising:
informing a second entity of a compute capability of a first entity for taking over one or more artificial intelligence / machine learning operations from the second entity;
receiving, by the first entity, a request from the second entity to take over one of the one or more artificial intelligence / machine learning operations from the second entity;
performing, by the first entity, the one of the artificial intelligence / machine learning operations to obtain a result of the one of the one or more artificial intelligence / machine learning operations;
providing, by the first entity to the second entity, the result of the one of the one or more artificial intelligence / machine learning operations.

## Description

### Technical Field

The present disclosure relates to AI/ML operations.

### Abbreviations

- 3GPP: 3^{rd} Generation Partnership Project
- 5G/6G/7G: 5^{th}/6^{th}/7^{th} Generation
- AI/ML: Artificial Intelligence/Machine Learning
- AP: Application Processor
- CNN: Convolutional Neural Networks
- LCM: Lifecycle Management
- LSTM: Long Short-Term Memory
- MT: Mobile Termination
- RNN: Recurrent Neural Networks
- SoC: System on Chip
- TA: Terminal Adaptor
- TE: Terminal Equipment
- TF: TransFormer
- TS: Technical Specification
- UE: User Equipment

### Glossary

### AT commands:

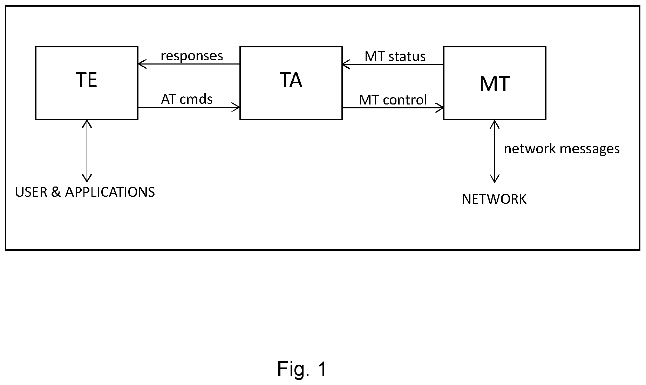

AT commands are widely used to control modems. The AT commands are a standardized set of commands that are used by the application processor to communicate with the modem. The architecture and setup of the AT Command interface is shown in Fig. 1. 3GPP TS 27.007 specifies a profile of AT commands and recommends that this profile be used for controlling Mobile Termination (MT) functions and network services from a Terminal Equipment (TE) through Terminal Adaptor (TA).

3GPP TS 27.007 assumes an abstract architecture comprising a TE (e.g., a computer) and a MT interfaced by a TA. The span of control of the defined commands should allow handling of any physical implementation that this abstract architecture may lead to:
- TA, MT and TE as three separate entities;
- TA integrated under the MT cover, and the TE implemented as a separate entity;
- TA integrated under the TE cover, and the MT implemented as a separate entity; and
- TA and MT integrated under the TE cover as a single entity.

The commands described in 3GPP TS 27.007 may be observed on the link between the TE and the TA. However, most of the commands retrieve information about the MT, not about the TA.

### Background

In a typical communication device (terminal) like a smartphone, the communication device comprises 2 main building blocks: the Application Processor (AP) and a Modem. Typically, the AP handles all the user interactions and the related applications like User Experience, Multimedia Engine etc., while the modem is responsible for all the communication (transceiving) aspects of the device with the network. The manufacturer of the communication device may obtain the AP and the modem from different vendors and assemble them in the communication device. In some communication devices, one or both of the AP and the modem use AI/ML functionality. For example, to realize performance gains, the modem may provide Al-based channel-state feedback and optimization, Al-based mmWave beam management, or Al-based network selection for superior coverage and link robustness.

### Summary

It is an object to improve the prior art.

According to a first aspect, there is provided an apparatus comprising:
one or more processors, and memory storing instructions that, when executed by the one or more processors, cause the apparatus to perform:
informing a second entity of a compute capability of a first entity for taking over one or more artificial intelligence / machine learning operations from the second entity;
receiving, by the first entity, a request from the second entity to take over one of the one or more artificial intelligence / machine learning operations from the second entity;
performing, by the first entity, the one of the artificial intelligence / machine learning operations to obtain a result of the one of the one or more artificial intelligence / machine learning operations;
providing, by the first entity to the second entity, the result of the one of the one or more artificial intelligence / machine learning operations.

The instructions, when executed by the one or more processors, may further cause the apparatus to perform
receiving, by the first entity, a request from the second entity to inform of an availability of the first entity to take over the one or more artificial intelligence / machine learning operations;
monitoring whether the first entity is available to take over the one or more artificial intelligence / machine learning operations in response to the receiving the request to inform of the availability of the first entity;
informing the second entity that the first entity is available to take over the one or more artificial intelligence / machine learning operations in response to monitoring that the first entity is available to take over the one or more artificial intelligence / machine learning operations.

At least one of the informing of the compute capability, the providing the result, or the informing that the first entity is available may be performed using a respective AT command.

The request to take over one of the one or more artificial intelligence / machine learning operations may be received in a first AT unsolicited response or in a first AT command.

The request to inform of the availability may be received in a second AT unsolicited response or in a second AT command.

The instructions, when executed by the one or more processors, may further cause the apparatus to perform at least one of:
receiving data for the one of the one or more artificial intelligence / machine learning operations from a first memory shared by the first entity and the second entity; or
the providing the result of the one of the one or more artificial intelligence / machine learning operations to the second entity via a second memory shared by the first entity and the second entity.

According to a second aspect of the invention, there is provided an apparatus comprising:
one or more processors, and memory storing instructions that, when executed by the one or more processors, cause the apparatus to perform:
receiving, by a second entity, an information of a compute capability of a first entity for taking over one or more artificial intelligence / machine learning operations from the second entity;
requesting the first entity, by the second entity, to take over one of the one or more artificial intelligence / machine learning operations from the second entity;
receiving, by the second entity from the first entity, a result of the one of the one or more artificial intelligence / machine learning operations in response to the requesting to take over the one of the one or more artificial intelligence / machine learning operations.

The instructions, when executed by the one or more processors, may further cause the apparatus to perform at least one of:
requesting the first entity, to inform of an availability of the first entity to take over the one or more artificial intelligence / machine learning operations from the second entity;
monitoring whether the second entity receives an information that the first entity is available to take over the one or more artificial intelligence / machine learning operations from the second entity in response to the providing the request to inform of the availability of the first entity;
inhibiting the second entity to request the first entity to take over the one of the one or more artificial intelligence / machine learning operations in response to monitoring that the second entity does not receive the information that the first entity is available .

At least one of the information of the compute capability, the result of the one of the one or more artificial intelligence / machine learning operations, or the information that the first entity is available, may be received using a respective AT command.

The requesting to take over one of the one or more artificial intelligence / machine learning operations may use a first AT unsolicited response or a first AT command.

The requesting to inform of the availability may use a second AT unsolicited response or a second AT command.

The instructions, when executed by the one or more processors, may further cause the apparatus to perform at least one of:
providing data for the one of the one or more artificial intelligence / machine learning operations to a first memory shared by the first entity and the second entity; or
the receiving the result of the one of the one or more artificial intelligence / machine learning operations from the first entity via a second memory shared by the first entity and the second entity.

According to a third aspect of the invention, there is provided a method comprising:
informing a second entity of a compute capability of a first entity for taking over one or more artificial intelligence / machine learning operations from the second entity;
receiving, by the first entity, a request from the second entity to take over one of the one or more artificial intelligence / machine learning operations from the second entity;
performing, by the first entity, the one of the artificial intelligence / machine learning operations to obtain a result of the one of the one or more artificial intelligence / machine learning operations;
providing, by the first entity to the second entity, the result of the one of the one or more artificial intelligence / machine learning operations.

The method may further comprise
receiving, by the first entity, a request from the second entity to inform of an availability of the first entity to take over the one or more artificial intelligence / machine learning operations;
monitoring whether the first entity is available to take over the one or more artificial intelligence / machine learning operations in response to the receiving the request to inform of the availability of the first entity;
informing the second entity that the first entity is available to take over the one or more artificial intelligence / machine learning operations in response to monitoring that the first entity is available to take over the one or more artificial intelligence / machine learning operations.

At least one of the informing of the compute capability, the providing the result, or the informing that the first entity is available may be performed using a respective AT command.

The request to take over one of the one or more artificial intelligence / machine learning operations may be received in a first AT unsolicited response or in a first AT command.

The request to inform of the availability may be received in a second AT unsolicited response or in a second AT command.

The method may further comprise at least one of:
receiving data for the one of the one or more artificial intelligence / machine learning operations from a first memory shared by the first entity and the second entity; or
the providing the result of the one of the one or more artificial intelligence / machine learning operations to the second entity via a second memory shared by the first entity and the second entity.

According to a fourth aspect of the invention, there is provided a method comprising:
receiving, by a second entity, an information of a compute capability of a first entity for taking over one or more artificial intelligence / machine learning operations from the second entity;
requesting the first entity, by the second entity, to take over one of the one or more artificial intelligence / machine learning operations from the second entity;
receiving, by the second entity from the first entity, a result of the one of the one or more artificial intelligence / machine learning operations in response to the requesting to take over the one of the one or more artificial intelligence / machine learning operations.

The method may further comprise at least one of:
requesting the first entity, to inform of an availability of the first entity to take over the one or more artificial intelligence / machine learning operations from the second entity;
monitoring whether the second entity receives an information that the first entity is available to take over the one or more artificial intelligence / machine learning operations from the second entity in response to the providing the request to inform of the availability of the first entity;
inhibiting the second entity to request the first entity to take over the one of the one or more artificial intelligence / machine learning operations in response to monitoring that the second entity does not receive the information that the first entity is available .

At least one of the information of the compute capability, the result of the one of the one or more artificial intelligence / machine learning operations, or the information that the first entity is available, may be received using a respective AT command.

The requesting to take over one of the one or more artificial intelligence / machine learning operations may use a first AT unsolicited response or a first AT command.

The requesting to inform of the availability may use a second AT unsolicited response or a second AT command.

The method may further comprise at least one of:
providing data for the one of the one or more artificial intelligence / machine learning operations to a first memory shared by the first entity and the second entity; or
the receiving the result of the one of the one or more artificial intelligence / machine learning operations from the first entity via a second memory shared by the first entity and the second entity.

Each of the methods of the third and fourth aspects may be a method of offloading AI/ML operations.

For each of the first to fourth aspects, the one or more artificial intelligence / machine learning operations may comprise at least one of training a first artificial intelligence / machine learning model, calculating inference based on a second artificial intelligence / machine learning model, validating a third artificial intelligence / machine learning model, or compiling a fourth artificial intelligence / machine learning model.

For each of the first to fourth aspects, a device may include the first entity and the second entity.

For each of the first to fourth aspects, either
- the first entity comprises an application processor and the second entity comprises a modem; or
- the first entity comprises a modem and the second entity comprises an application processor.

According to a fifth aspect of the invention, there is provided a computer program product comprising a set of instructions which, when executed on an apparatus, is configured to cause the apparatus to carry out the method according to any of third or fourth aspects. The computer program product may be embodied as a computer-readable medium or directly loadable into a computer.

According to some example embodiments, at least one of the following advantages may be achieved:
- A generic interface to offload AI/ML related workloads paves way for offloading of the AI/ML related workload;
- Interoperability of hardware of different vendors is improved;
- Brings down complexity and costs for running Ai/ML compute infrastructure on separate hardware components;
- Infrastructure, which is otherwise idle, may be used.

### Brief description of the drawings

Further details, features, objects, and advantages are apparent from the following detailed description of the preferred example embodiments which is to be taken in conjunction with the appended drawings, wherein:
Fig. 1 shows an architecture and setup of a AT command interface according to 3GPP TS 27.007;
Fig. 2 shows a high-level architecture of a typical communication between AP and modem using a shared memory;
Fig. 3 shows a message sequence chart according to some example embodiments;
Fig. 4 shows an apparatus according to an example embodiment;
Fig. 5 shows a method according to some example embodiments;
Fig. 6 shows an apparatus according to an example embodiment;
Fig. 7 shows a method according to an example embodiment; and
Fig. 8 shows an apparatus according to an example embodiment.

### Detailed description of certain example embodiments

Herein below, certain example embodiments are described in detail with reference to the accompanying drawings, wherein the features of the example embodiments can be freely combined with each other unless otherwise described. However, it is to be expressly understood that the description of certain example embodiments is given by way of example only, and that it is by no way intended to be understood as limiting the disclosure to the disclosed details.

Moreover, it is to be understood that the apparatus is configured to perform the corresponding method, although in some cases only the apparatus or only the method are described.

The AI/ML functionality may comprise one or more of the following AI/ML operations: training of an AI/ML model, validating a trained AI/ML model, or calculating inference by a trained AI/ML model (and potentially inferring according to the result of the calculation).

For AP and modem, typically different considerations with respect to their AI/ML compute capability may be made:
For the modem:
1. Running an AI compute capability at the modem comes at a cost of computing resources, impacting power consumption of the device.
2. For use cases like channel-state feedback, or beam management, the AI compute capability at the modem is occupied for calculating the inference all the time. It may result in the internal entities competing for the (few) remaining (shared) AI/ML compute resources.

On the other hand, for the AI compute infrastructure at the AP:
1. The AI/ML compute capability can be superior to the one at the modem in terms of one or both of hardware and software components.
2. There may be instances when the AI/ML compute infrastructure at the AP is idle and available - for e.g., at night, or when the phone is in idle mode.

Therefore, in some example embodiments, the modem may offload some of its AI/ML operations to the AI/ML compute infrastructure of the AP when sufficient capacity of AI/ML compute infrastructure is available at the AP.

On the other hand, in some cases, some AI/ML operation at the AP may be that complex that other AI/ML operations do not have sufficient AI/ML compute capacity at the AP. According to some example embodiments, if sufficient AI/ML compute capacity is available at the modem, the AP may offload these other AI/ML operations to the modem.

The term "AI/ML compute capacity" means any compute capacity that is suitable for an AI/ML operation. Otherwise, the "AI/ML compute capacity" may not be restricted.

For the offloading the AI/ML operations from modem to AP or from AP to modem, AP and modem communicate with each other. Some example embodiments enable AP and modem for such a communication. According to some example embodiments, AT commands (see 3GPP TS 27.007) may be used in this communication. However, other commands than AT commands may be used in addition to or instead of AT commands.

Since AP and modem may be provided by different vendors, it is recommendable that the communication is standardized, e.g. by 3GPP.

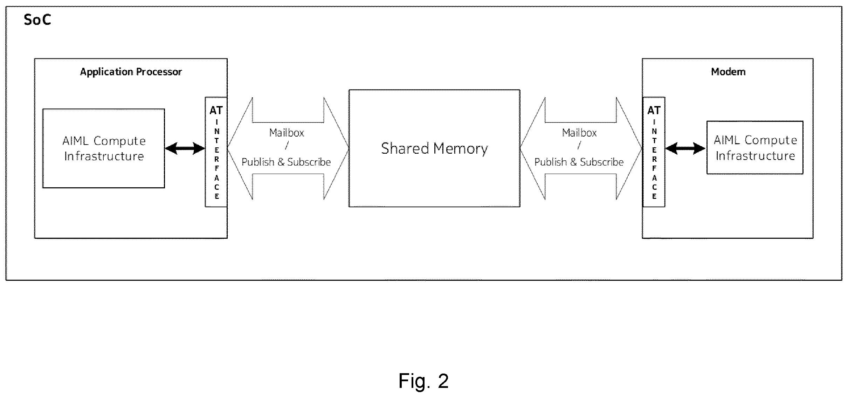

Fig. 2 shows a high-level architecture of a typical communication mechanism between an AP and a Modem within an SoC using shared memory. The concept of shared memory with a Mailbox or Publish/Subscribe mechanism built across the components that communicate with each other is a commonly used method to communicate between different components in an SoC. Apart from the exchange of data, there is also an AT interface at both AP and the Modem. This interface is used to exchange AT commands and responses across AP and Modem.

Some example embodiments use these typical communication mechanisms between AP and modem. However, other example embodiments may use other communication mechanisms than a shared memory and/or an AT interface. Nevertheless, hereinafter, some example embodiments using the AT interface are described as example embodiments. That is, in these examples, using the AT command interface, the AI/ML compute infrastructure at both the AP and Modem can exchange information. Also, a shared memory may be used to exchange data (for e.g., training data, model binary, inference input/output) as a part of the offloading workflow.

In the concept of the AT interface shown in Fig. 1, the AT interface at the Modem in Fig. 2 may be considered as the MT, and the AT interface at the Application Processor (AP) in Fig. 2 may be considered as a combination of TE and TA.

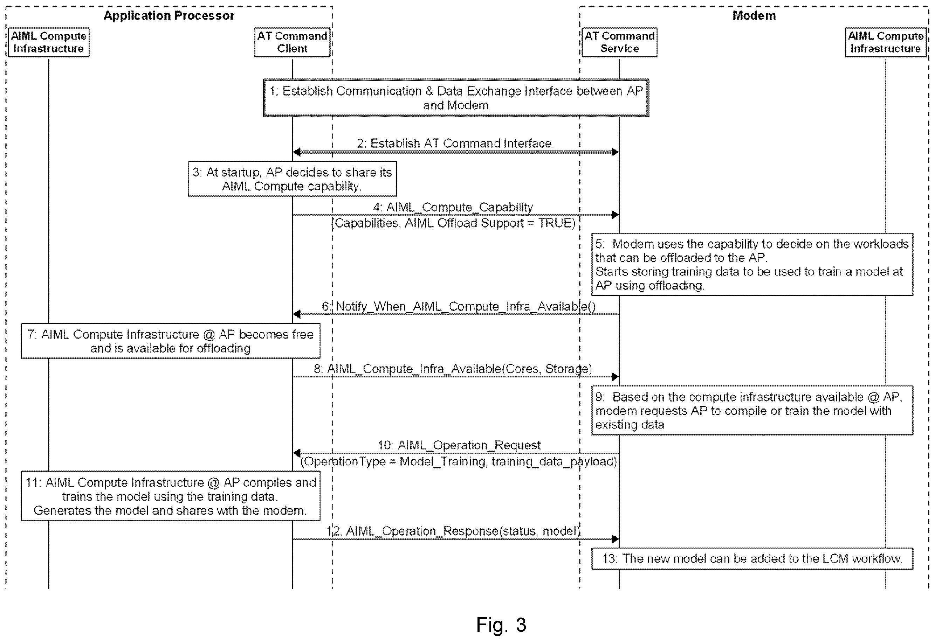

Fig. 3 shows a message sequence chart according to some example embodiments. As an example, in Fig. 3 the AI/ML operation comprises training of a AI/ML model. Offloading of other AI/ML operations may use a corresponding message sequence.

In the example embodiment of Fig. 3, the setup may comprise one or more of the following, for example:
- The AP has a better AI/ML compute infrastructure compared to the AI/ML compute infrastructure at the modem.
- The AI/ML compute infrastructure at the Modem is occupied with various loads internal to the Modem.
- There is a communication and data sharing interface between the AP and the modem. As an option, the interface may comprise a shared memory interface, as illustrated in Error! Reference source not found..

The actions in Fig. 3 are as follows:
1 - During power-on, the Application Processor establishes the communication link with the Modem for data sharing.
2 - The AT command interface is established to exchange AT commands/responses between the AP and the Modem.
3 - The AP decides to share its AI/ML compute capability with the Modem. Examples of the AI/ML compute capability may be e.g., (but not limited to)
   a) The compilers and tools available at AP for running the workflows.
   b) Types of models, e.g., CNN, RNN, LSTM, TF, etc., that can be generated.
   c) Capability of the compute cores.
4 - The AI/ML compute capability of the AP is indicated to the modem using an AT command. AP also notifies to the Modem that it can take over AI/ML workload (i.e., one or more AI/ML operations) offloaded by the Modem.
5 - Based on the indicated AI/ML compute capability of the AP, modem decides what AI/ML operation (AI/ML job) to be offloaded to the AP. In the present example, modem decides to offload training of a AI/ML model. Therefore, modem also starts storing its training data for the training of the AI/ML model.
6 - The Modem then configures the AP to provide a notification when the AI/ML compute capability (i.e. the necessary Infrastructure) is available. Modem uses an AT Command to configure the AP.
7 - AP detects that the AI/ML compute infrastructure of the AP becomes available for the offloading. There may be various reasons why the AI/ML compute infrastructure becomes available, for example:
   a) AP is idle.
   b) AP is plugged to the charger and not being used in the night.
8 - AP notifies the Modem using an AT command that it is ready to take over some AI/ML workload because the AI/ML compute infrastructure is available for sharing. In the same notification, AP can also inform the kind of infrastructure it is ready to share. E.g.,
   a) The no. of cores it can spare.
   b) The total storage that it can spare for storing the training data.
9 - Taking into account the AI/ML compute infrastructure available at AP, the Modem packages the training data, model parameters and other configurations to be sent to AP.
10 - Modem notifies of the Offloading Task to the AP using an AT Command. The package payload is shared using the standard communication interface between the AP and the Modem (e.g. via the shared memory).
11 - AP uses the data from the package payload and runs the AI/ML operation to generate a result.
12 - AP then transfers the result of the AI/ML operation to Modem using an AT Command.
13 - Modem may add the trained model to the LCM workflow.

In the example of Fig. 3, it is assumed that AP informs the modem in action 4 on its capability, regardless of whether or not the capability is available for sharing at this time. Therefore, the modem configures the AP to inform on the availability (actions 6 to 8). However, in some example embodiments, AP informs in action 4 on its AI/ML compute capacity available at that time. In such example embodiments, actions 6 to 8 may be omitted.

If the workflow of Fig. 3 (or a similar workflow where the modem and the AP share the AI/ML compute capacity of the modem) is realized using AT commands, one or more AT commands may be additionally defined. For example:
- From Application Processor to Modem side:
   ∘ AT Command to indicate the Application Processor AI/ML Compute capabilities.
   ∘ AT Command to indicate when Application Processor AI/ML Compute infrastructure becomes free/busy.
   ∘ AT Command to deliver the status of the trained model.
   ∘ AT Command to deliver the new/updated Model.
   ∘ AT Command to interrupt the operation/report errors e.g., due to Application Processor AI/ML Compute Infrastructure became occupied in another operation.
- From Modem to Application Processor side:
   Note: In this case, some AT commands can be unsolicited, i.e., to report or deliver some information to the AP
      ∘ AT Command to request Application Processor to notify when AI/ML Compute Infrastructure becomes free/not free for offloading.
      ∘ AT Command to request certain operation from the Application Processor AI/ML Compute Infrastructure, e.g., to start Model Training, Model compilation, etc.
      ∘ AT Command to suspend/resume/abort an AI/ML workload.
      ∘ AT Command to request delivering intermediate results/status (processing/on-hold/busy...).

There are two concepts how the AT Commands can be used:
Concept 1:
   Here, the existing concept in 3GPP TS 27.007 describing how AT Commands work is reused, i.e. the Application processor (TE) always acts as the initiator/requestor of the AT Command (i.e. the Master), and the Modem (MT) always acts as the responder/follower of the requested AT Command (i.e. the Slave).
   In this case, the AT Commands provided by Modem to AP (e.g., action 10 in Fig. 3) may be unsolicited responses and may not be new requests initiated by the Modem itself.
Concept 2:
   An additional concept is introduced on top of the existing concept in 3GPP TS 27.007. According to this concept, the Modem (MT) may also act as an initiator/requestor/master for the AT Commands, and the Application processor (TE) may act as the responder/follower/slave for the requested commands.
   In this case, the AT Commands provided by Modem to AP (e.g., action 10 in Fig. 3) can be of a form of Requests that will be waiting for Responses from AP to Modem.

In some example embodiments, the concept 1 is applicable to some AT command(s), and the concept 2 is applicable to other AT command(s).

An example of such an additional AT Command is shown in Table 1 and the following text for the action 4 in **Error! Reference source not found..** 3 (Indicate Compute Capability of AP +CAIML).

| **Command** | **Possible response(s)** |
|---|---|
| +CAIMLCAP=[<aimlcap>[,<a imlopsupp>]] | +*CME ERROR: <err>* |
| +CAIMLCAP? | +CAIMLCAP: <aimlcap> |
| | *+CME ERROR: <err>* |
| +CAIMLCAP=? | +CAIMLCAP: (list of supported <aimlcap>s),(list of supported <aimlopsupp>s) |
| | *+CME ERROR: <err>* |
| **Table 1:** +CCAP parameter command syntax | |

### Description:

Set command indicates the capability <aimlcap> of the AIML Compute Infrastructure at the Application Processor from a set of standardized AIML capabilities. <aimlopsupp> indicates whether ALML offload operations are supported or not.

Read command returns the current setting of <CAIMLCAP>.

Test command returns values supported by the MT as compound values.

### Defined values:

### <aimlcap>: integer type

- 0: TBD
- 1: TBD
- 2: TBD
- 3: TBD

### <aimlopsupp>: integer type

- 0: ALML operations are not supported
- 1: ALML operations are supported

### Implementation:

### Optional.

Some example embodiments may provide one or more of the following advantages:
1. A generic interface to offload AI/ML related workloads between an Application Processor and a Modem in a device (such as a terminal) is provided. This will pave way for offloading of AIML related workload between hardware from different vendors, increasing the interoperability of hardware.
2. The complexity/cost of development/running a powerful AIML compute infrastructure in separate hardware components in a same device is brought down.
3. Due to offloading of workloads between the Application Processor and Modem, the idle AIML compute infrastructure can be better utilized at the device.

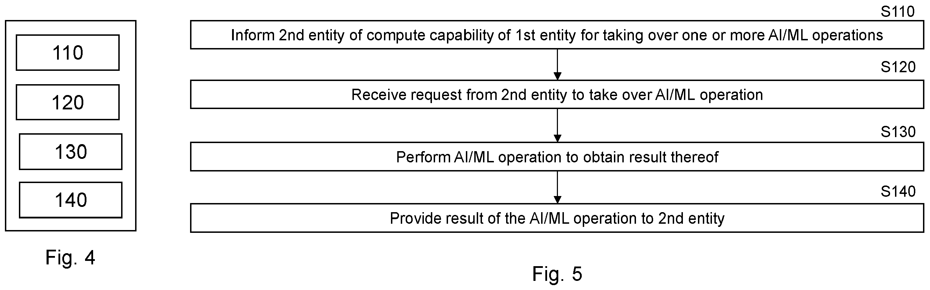

Fig. 4 shows an apparatus according to an example embodiment. The apparatus may be an entity (first entity) (such as an AP or a modem) or an element thereof. Fig. 5 shows a method according to an example embodiment. The apparatus according to Fig. 4 may perform the method of Fig. 5 but is not limited to this method. The method of Fig. 5 may be performed by the apparatus of Fig. 4 but is not limited to being performed by this apparatus.

The apparatus comprises means for informing 110, means for receiving 120, means for performing 130, and means for providing 140. The means for informing 110, means for receiving 120, means for performing 130, and means for providing 140 may be an informing means, receiving means, performing means, and providing means, respectively. The means for informing 110, means for receiving 120, means for performing 130, and means for providing 140 may be an informer, receiver, performer, and provider, respectively. The means for informing 110, means for receiving 120, means for performing 130, and means for providing 140 may be an informing processor, receiving processor, performing processor, and providing processor, respectively.

The means for informing 110 informs a second entity of a compute capability of a first entity (S110). The compute capability is for taking over one or more AI/ML operations from the second entity.

The means for receiving 120 receives, by the first entity, a request from the second entity to take over one of the one or more AI/ML operations from the second entity (S120). The means for performing 130 performs, by the first entity, the one of the AI/ML operations to obtain a result of the one of the one or more AI/ML operations (S130). The means for providing 140 provides, by the first entity to the second entity, the result of the one of the one or more AI/ML operations (S140).

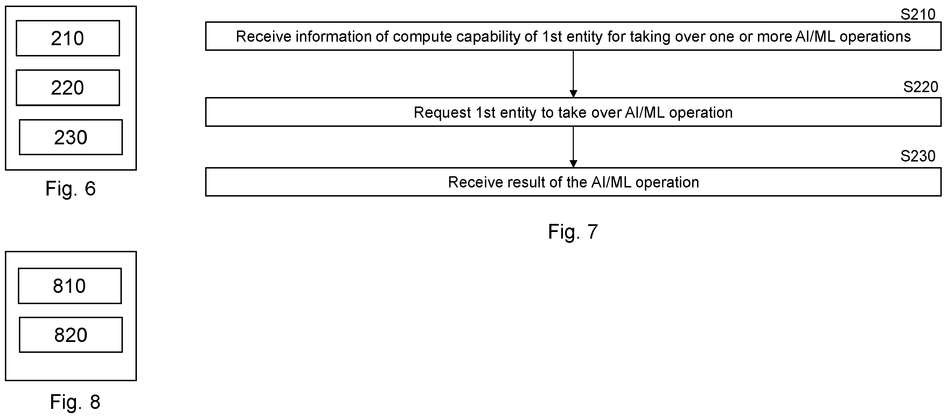

Fig. 6 shows an apparatus according to an example embodiment. The apparatus may be an entity (a second entity) (such as a modem or a AP) or an element thereof. Fig. 7 shows a method according to an example embodiment. The apparatus according to Fig. 6 may perform the method of Fig. 7 but is not limited to this method. The method of Fig. 7 may be performed by the apparatus of Fig. 6 but is not limited to being performed by this apparatus.

The apparatus comprises first means for receiving 210, means for requesting 220, and second means for receiving 230. The first means for receiving 210, means for requesting 220, and means for receiving 230 may be a first receiving means, requesting means, and second receiving means, respectively. The first means for receiving 210, means for requesting 220, and second means for receiving 230 may be a first receiver, requestor, and second receiver, respectively. The first means for receiving 210, means for requesting 220, and second means for receiving 230 may be a first receiving processor, requesting processor, and second receiving processor, respectively.

The first means for receiving 210 receives, by a second entity, an information of a compute capability of a first entity (S210). The compute capability is for taking over one or more AI/ML operations from the second entity.

The means for requesting 220 requests the first entity, by the second entity, to take over one of the one or more AI/ML operations from the second entity (S220). In response to the requesting to take over the one of the one or more AI/ML operations of S220, the second means for receiving 230 receives, by the second entity from the first entity, a result of the one of the one or more AI/ML operations (S230).

Fig. 8 shows an apparatus according to an example embodiment. The apparatus comprises at least one processor 810, at least one memory 820 storing instructions that, when executed by the at least one processor 810, cause the apparatus at least to perform the method according to at least one of the following figures and related description: Fig. 5, or Fig. 7.

Some example embodiments are explained with respect to 5G (NR). However, other example embodiments may be employed in other 3GPP generations, such as 4G, 6G, 7G, etc., in other wireless or wired communication devices, and in other systems employing plural components capable of AIML computing.

The AP and the modem may be considered as examples of a first entity and a second entity, respectively, which share AI/ML compute capacity of the first entity. However, in some example embodiments, other entities than the AP and the model may act as the first entity and the second entity. In particular, in some example embodiments, the modem may be the first entity and the AP may be the second entity.

A device (such as a terminal) may comprise both the first entity and the second entity.

A UE is an example of a terminal. Other examples are MTC devices. Each of the terminals may be implemented as a smartphone, a mobile phone, a laptop, a sensor device etc. Typical terminals are cellular communication devices for communicating in a cellular network (such as a 3GPP network), but this is not mandatory.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality. The same applies correspondingly to the terminal.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments provide, for example, an entity (such as an application processor or a modem), typically of a terminal, or an element thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments. However, it should be noted that the description of the preferred example embodiments is given by way of example only and that various modifications may be made without departing from the scope of the disclosure as defined by the appended claims.

The terms "first X" and "second X" include the options that "first X" is the same as "second X" and that "first X" is different from "second X", unless otherwise specified. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

## Claims

1. Apparatus comprising:
one or more processors, and memory storing instructions that, when executed by the one or more processors, cause the apparatus to perform:
informing a second entity of a compute capability of a first entity for taking over one or more artificial intelligence / machine learning operations from the second entity;
receiving, by the first entity, a request from the second entity to take over one of the one or more artificial intelligence / machine learning operations from the second entity;
performing, by the first entity, the one of the artificial intelligence / machine learning operations to obtain a result of the one of the one or more artificial intelligence / machine learning operations;
providing, by the first entity to the second entity, the result of the one of the one or more artificial intelligence / machine learning operations.

2. The apparatus according to claim 1, wherein the instructions, when executed by the one or more processors, further cause the apparatus to perform
receiving, by the first entity, a request from the second entity to inform of an availability of the first entity to take over the one or more artificial intelligence / machine learning operations;
monitoring whether the first entity is available to take over the one or more artificial intelligence / machine learning operations in response to the receiving the request to inform of the availability of the first entity;
informing the second entity that the first entity is available to take over the one or more artificial intelligence / machine learning operations in response to monitoring that the first entity is available to take over the one or more artificial intelligence / machine learning operations.

3. The apparatus according to any of claims 1 and 2, wherein at least one of the informing of the compute capability, the providing the result, or, if dependent on claim 2, the informing that the first entity is available, is performed using a respective AT command.

4. The apparatus according to any of claims 1 to 3, wherein at least one of
- the request to take over one of the one or more artificial intelligence / machine learning operations is received in a first AT unsolicited response or in a first AT command; or,
- if dependent directly or indirectly on claim 2, the request to inform of the availability is received in a second AT unsolicited response or in a second AT command.

5. The apparatus according to any of claims 1 to 4, wherein the instructions, when executed by the one or more processors, further cause the apparatus to perform at least one of:
receiving data for the one of the one or more artificial intelligence / machine learning operations from a first memory shared by the first entity and the second entity; or
the providing the result of the one of the one or more artificial intelligence / machine learning operations to the second entity via a second memory shared by the first entity and the second entity.

6. Apparatus comprising:
one or more processors, and memory storing instructions that, when executed by the one or more processors, cause the apparatus to perform:
receiving, by a second entity, an information of a compute capability of a first entity for taking over one or more artificial intelligence / machine learning operations from the second entity;
requesting the first entity, by the second entity, to take over one of the one or more artificial intelligence / machine learning operations from the second entity;
receiving, by the second entity from the first entity, a result of the one of the one or more artificial intelligence / machine learning operations in response to the requesting to take over the one of the one or more artificial intelligence / machine learning operations.

7. The apparatus according to claim 6, wherein the instructions, when executed by the one or more processors, further cause the apparatus to perform
requesting the first entity, to inform of an availability of the first entity to take over the one or more artificial intelligence / machine learning operations from the second entity;
monitoring whether the second entity receives an information that the first entity is available to take over the one or more artificial intelligence / machine learning operations from the second entity in response to the providing the request to inform of the availability of the first entity;
inhibiting the second entity to request the first entity to take over the one of the one or more artificial intelligence / machine learning operations in response to monitoring that the second entity does not receive the information that the first entity is available .

8. The apparatus according to any of claims 6 and 7, wherein at least one of the information of the compute capability, the result of the one of the one or more artificial intelligence / machine learning operations, or, if dependent on claim 2, the information that the first entity is available, is received using a respective AT command.

9. The apparatus according to any of claims 6 to 8, wherein at least one:
the requesting to take over one of the one or more artificial intelligence / machine learning operations uses a first AT unsolicited response or a first AT command; or,
if dependent directly or indirectly on claim 2, the requesting to inform of the availability uses a second AT unsolicited response or a second AT command.

10. The apparatus according to any of claims 6 to 9, wherein the instructions, when executed by the one or more processors, further cause the apparatus to perform at least one of:
providing data for the one of the one or more artificial intelligence / machine learning operations to a first memory shared by the first entity and the second entity; or
the receiving the result of the one of the one or more artificial intelligence / machine learning operations from the first entity via a second memory shared by the first entity and the second entity.

11. The apparatus according to any of claims 1 to 10, wherein the one or more artificial intelligence / machine learning operations comprise at least one of training a first artificial intelligence / machine learning model, calculating inference based on a second artificial intelligence / machine learning model, validating a third artificial intelligence / machine learning model, or compiling a fourth artificial intelligence / machine learning model.

12. The apparatus according to any of claims 1 to 11, wherein a device includes the first entity and the second entity.

13. The apparatus according to any of claims 1 to 12, wherein either
- the first entity comprises an application processor and the second entity comprises a modem; or
- the first entity comprises a modem and the second entity comprises an application processor.

14. Method comprising:
informing a second entity of a compute capability of a first entity for taking over one or more artificial intelligence / machine learning operations from the second entity;
receiving, by the first entity, a request from the second entity to take over one of the one or more artificial intelligence / machine learning operations from the second entity;
performing, by the first entity, the one of the artificial intelligence / machine learning operations to obtain a result of the one of the one or more artificial intelligence / machine learning operations;
providing, by the first entity to the second entity, the result of the one of the one or more artificial intelligence / machine learning operations.

15. Method comprising:
receiving, by a second entity, an information of a compute capability of a first entity for taking over one or more artificial intelligence / machine learning operations from the second entity;
requesting the first entity, by the second entity, to take over one of the one or more artificial intelligence / machine learning operations from the second entity;
receiving, by the second entity from the first entity, a result of the one of the one or more artificial intelligence / machine learning operations in response to the requesting to take over the one of the one or more artificial intelligence / machine learning operations.
